# EUROPEAN PATENT SPECIFICATION

(11) **EP 0 572 205 B1**
(45) Date of publication and mention of the grant of the patent: **30.09.1998**
(21) Application number: 93304027.1
(22) Date of filing: 25.05.1993
(51) Int. Cl.: G06F 3/033

(54) **Object oriented display system**
Objektorientiertes Anzeigesystem
Système d'affichage orienté objets

(30) Priority: 26.05.1992 US 888223; 26.05.1992 US 888221
(43) Date of publication of application: 01.12.1993
(73) Proprietor: International Business Machines Corporation, Armonk, N.Y. 10504 (US)
(72) Inventor: Berry, Richard Edmond, Georgetown, Texas 78628 (US); Henshaw, Susan Faye, Cary, North Carolina 27513 (US); Roberts, David John, Stockton, Warwickshire CV23 8JG (GB)
(74) Representative: Burt, Roger James, Dr.

(56) References cited:
- EP-A- 0 475 870
- RESEARCH DISCLOSURE no. 309, January 1990, HAVANT GB page 10 , XP96513 'Multiple Visual Occurences of a Single Object Instance'
- 'Systems Application Architecture, Common User Access- Advanced Interface Design Guide' June 1989 , IBM , BOCA RATON, FL, USA
- IBM Technical Disclosure Bulletin, Vol.33, No.6B,November 1990,Pages271-273, "ABSTRACTION OF MOUSE/KEYBOARD USER INPUT MECHANISMS".

## Description

This invention generally relates to improvements in display systems and more particularly to menu bar selection processing.

Currently, graphical user interfaces present menu choices to a user using a combination of a menu bar and pull-down menus. An example of this technique is found in US Patent 4,772,882 which discloses menu item selection in a personal computer system through the use of a mouse device. The display system has means for allowing a user to invoke a header block which performs the function of a menu bar, and to erase the header block from the screen when menu operations are not required. Multiple menu items can be selected during the same menu session by using a pair of mouse buttons to generate a sequence of selection commands.

The menu bar, first popularized by Xerox and Apple in the early 1980s is typically a horizontal row of choices across the top of the display screen or across the top of a particular window on the display. A pull-down menu appears below a menu bar choice when a user selects a choice. The menu bar choices are represented by words such as FILE, EDIT, VIEW, OPTIONS, HELP and so forth.

Several of these interfaces represent objects as icons and allow a user to perform actions on a particular object by dragging its associated icon via a mouse, or by selecting choices from the menu bar and pull-down menus. US patent 4,899,136 discloses a multiprocessor system with a user interface in the form of metaphoric objects, called icons, with which the user can interact by changing the input focus to a designated object by visually pointing to it via the input means, which thereafter permits manipulation of the designated object or interaction with data input/output relative to the designated object.

However, these interfaces provide little direct correlation between dragging actions and actions accomplished via the menus. They are treated as two separate and independent mechanisms. Users can become confused about the relationships of actions performed via the menus and via the dragging of the icons.

Microsoft has attempted to address some of the user's requirements for user selection of menu commands by providing a separate line of button commands that are referred to as a toolbar. The toolbar is located under the menu bar. However, the graphical representations cannot be dragged or otherwise manipulated by a user with the same degree of freedom as an icon. Finally, the button commands cannot be incorporated into the menu bar by the user.

The 'Systems Application Architecture, Common User Access-Advanced Interface Design Guide' (SC26-4582-0), June 1989, IBM, Boca Raton, Florida USA, Chapter 12 pages 103 to 115 describes a "workplace environment" having an object-oriented approach to interaction with a computer system through direct manipulation of objects, and system objects represented by icons to handle common applications and system functions.

Research Disclosure No. 309, January 1990, Havant GB page 10, XP96513 relates to "Multiple visual Occurrences of a Single Object Instance and describes a method which allows for multiple visual occurrences of a single object instance in an iconic user interface environment as follows:

"In a multi-window, iconic user interface, it is sometimes difficult to locate an object due to the fact that the object instantiation in the interface is a direct reflection of the 'location' of the represented object in the underlying computer storage framework (e.g., two levels deep in a subdirectory structure in the file system) and only appears in one place in the interface. That place may be obscured by overlapping windows, etc.

In the new method an object can appear to be in several places simultaneously. Each visual occurrence of the object is actually a reference to a single, unique instance of the object in the underlying storage framework.

The unique instance of the object implements a 'copy reference' method which, when invoked, returns a copy of the iconic representation of the object instance. These 'copies' can be placed where they are most convenient in the interface. Copy objects are altered slightly in appearance (e.g., colour, shading, name prefix, etc. ) so that the user will know that this is a copy reference to an actual object elsewhere in the interface."

The prior art is void of direct correlation between the group of choices in a pull-down menu and an object. Current menu-bar interface actions which affect a particular object are typically spread across multiple pull-down menus, and other actions may apply to two or more objects. Thus, users can become confused concerning which object that may be affected by a particular choice.

Accordingly, it is an object of the present invention to substantially mitigate the problems identified in the prior art.

It is a further object of the present invention to present a consistent response as between a plurality of identical icons to the selection of any one of the same.

According to the present invention there is now provided an object oriented display system comprising:
means for displaying a graphical representation of a computer system object on a display device;
means for displaying a plurality of icons, each associated with a computer system object or group of objects, said objects each having selectable actions associated therewith;
means for selecting one of said icons; and
means responsive to selection of one of said icons for determining an object type for the selected icon and causing the object or one of the group of objects associated with said selected icon to effect displaying of a submenu of selectable actions in accordance with the determined object type, said submenu being the same for all selections of icons which are associated with the same objects.

According to another aspect of the present invention there is provided a method of selecting actions to be performed on one or more computer system objects, each of said one or more computer system objects having selectable actions associated therewith, the method comprising the steps of:
displaying a graphical representation of an object on a display means;
displaying a plurality of icons, each associated with an object or group of objects;
responsive to operator selection of one of said icons, determining an object type for the selected icon; and
causing the object or one of the group of objects associated with the selected icon to effect displaying of a submenu of the selectable actions in accordance with the determined object type, wherein the displayed submenu is the same for all selections of icons which are associated with the same objects.

These and other objectives of the present invention are accomplished by the operation of an algorithm in the memory of a processor that provides for presenting a menu bar with imbedded icons. The icons can be selected and directly manipulated to perform operations associated with the particular icon upon another icon or other object on a display.

An embodiment of the present invention will now be described, by way of example only, with reference to the accompanying drawings in which:
Figure **1A** is a block diagram of a personal computer system in accordance with the subject invention;
Figure **1B** is a listing of pseudo code that sets forth the logic flow in accordance with the subject invention;
Figure **1C** is a flow chart that sets forth the logic flow in accordance with the subject invention;
Figure **1D** is a display showing an initial folder in accordance with the subject invention;
Figure **2** is an illustration of a display with a window with the contents of a folder displayed in accordance with the subject invention;
Figure **3** is an illustration of a display with a set of selections available for a particular icon in accordance with the subject invention;
Figure **4** is an illustration of a display with a set of selections available for a particular icon in a menu bar in accordance with the subject invention;
Figure **5** is an illustration of a display with a set of selections available for a particular icon in accordance with the subject invention;
Figure **6** is an illustration of a display with a particular icon selected in accordance with the subject invention;
Figure **7** is an illustration of a display with a particular icon in the menu bar selected and the selection choices for the icon presented in accordance with the subject invention;
Figure **8** is an illustration of a display with a particular icon's associated document opened in accordance with the subject invention;
Figure **9** is an illustration of a display with a particular document's pop up display invoked by selection from a menu icon in accordance with the subject invention;
Figure **10** is an illustration of a display with a particular table selected in accordance with the subject invention;
Figure **11** is an illustration of a pop up menu associated with a particular table in accordance with the subject invention;
Figure **12** is an illustration of a direct invocation of a table from a particular selection and menu in accordance with the subject invention; and
Figure **13** is an illustration of a display with a pop up menu associated with a particular icon in a report in accordance with the subject invention.

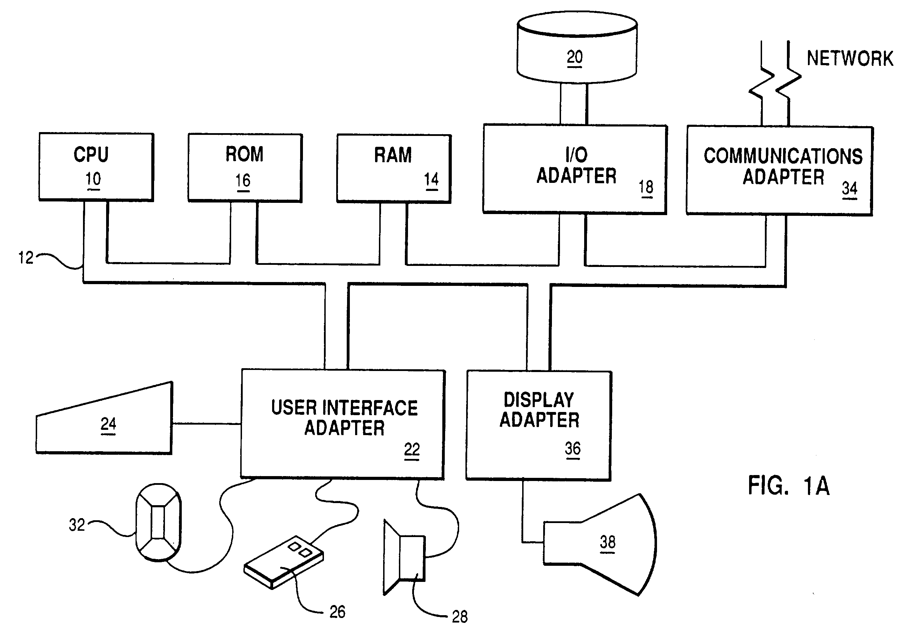

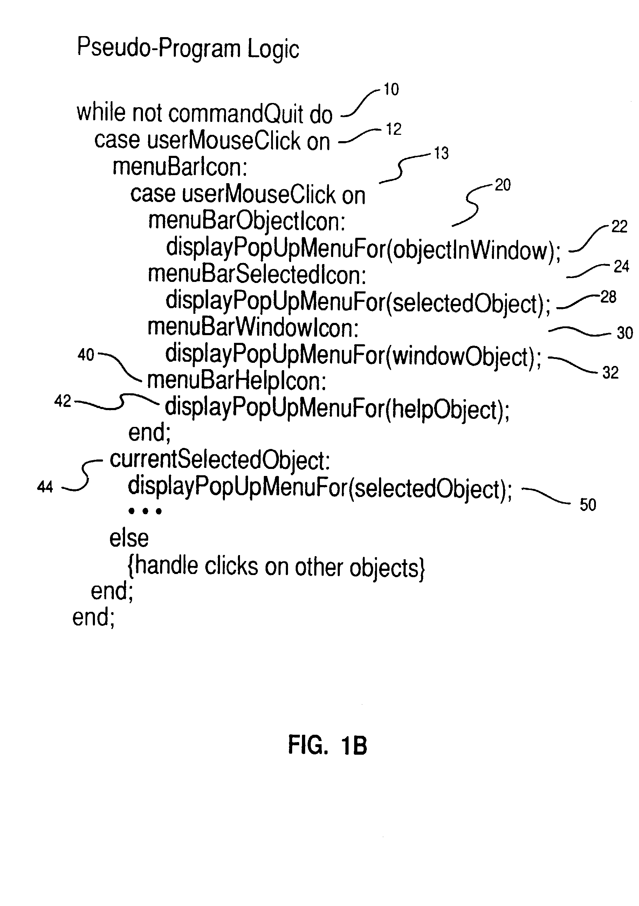

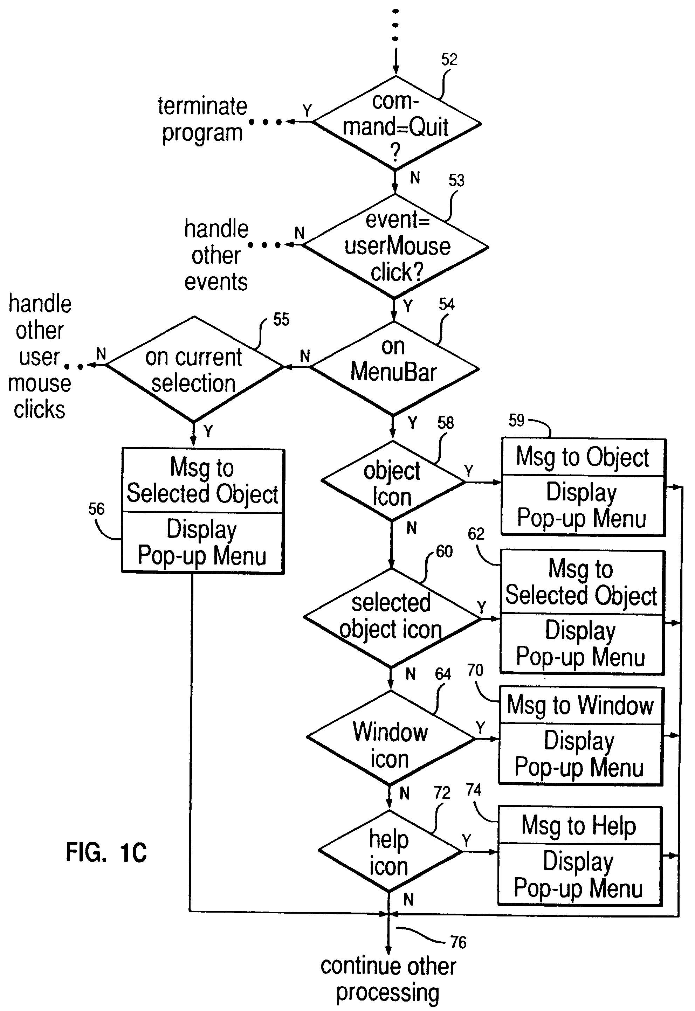

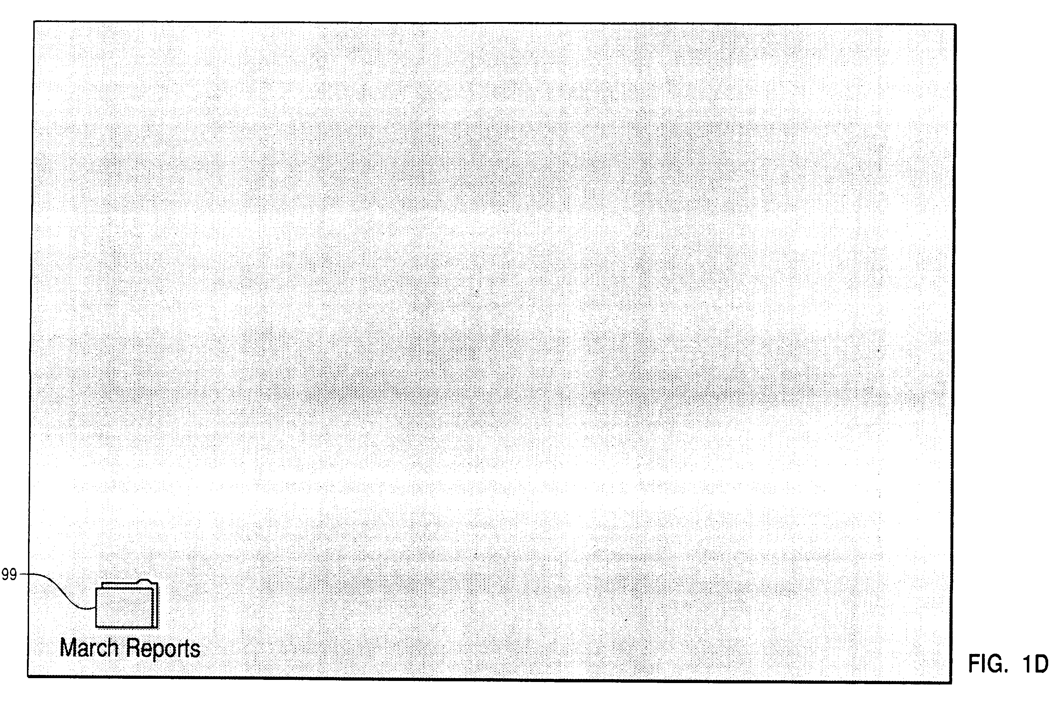

The invention is preferably practiced in a representative hardware environment as depicted in Figure 1, which illustrates a typical hardware configuration of a workstation in accordance with the invention having a central processing unit 10, such as a conventional microprocessor, and a number of other units interconnected via a system bus 12. The workstation shown in Figure 1 includes a Random Access Memory (RAM) 14, Read Only Memory (ROM) 16, an I/O adapter 18 for connecting peripheral devices such as disk units 20 and tape drives 40 to the bus, a user interface adapter 22 for connecting a keyboard 24, a mouse 25, a speaker 28, a microphone 32, and/or other user interface devices such as a touch screen device (not shown) to the bus, a communication adapter 23 for connecting the workstation to a data processing network and a display adapter 29 for connecting the bus to a display device 27.

The invention is a method and system for displaying a menu bar with imbedded icons on the menu bar on a display device 27. The use of icons as part of the menu bar choices clearly identifies the object upon which actions are to be performed.

Further using icons to represent objects at each level of an object hierarchy can be applied in a recursive fashion to enable decomposition of nested objects employing a consistent user interface at all levels. That is, an object may comprise or be constructed from at least one other sub-object and in turn that sub-object may comprise or be constructed from further sub-objects. At each level of decomposition the object can be displayed using a common user interface.

Icons can be dragged to accomplish actions in exactly the same manner as icons are used in other areas of the desktop motif. For example, dragging the icon of a document to a printer icon results in a print operation generating a paper version of the document. The invention allows users to drag icons from the menu bar to a printer icon with the same effect.

The invention provides a direct correlation between the dragging action and menu bar actions. Dragging actions on a particular icon perform actions that are listed as choices in an icon's associated pull-down menu. Thus, the dragging actions can then be thought of as simple short-cuts for corresponding menu choices.

The invention allows an icon to serve as a convenient handle for an object or group of objects that would otherwise be more difficult to manipulate. For example, when users select several objects in a window at the same time it is non-intuitive and confusing when the group of objects are dragged by one of the members of the group. Furthermore, the window may have been scrolled so that none of the selected objects are visible.

An icon in a menu represents a selected group regardless of how many selections are associated with the icon. Direct manipulation of the group is performed conveniently by simply dragging the menu bar icon that represents the selection group. Similarly, an icon from which a window is first opened is often covered by the window. The menu bar icon that represents the object is equivalent to the icon from which the window was opened, and the icon provides a convenient way to perform direct manipulation on the object displayed in the window. Thus, the use of icons as menu bar selections simplifies and enhances the interface of a user to a display system.

Figure 1B is a listing of pseudo-program logic in accordance with the subject invention. As user input events occur, the events are trapped in a while loop at 30, and mouse events are analyzed at 31. Mouse events on the menu bar involving icons 32 are routed to the appropriate object 33, 35, 37 and 40 depending on the position of the mouse pointer on the display. Each object handles the mouse event by displaying the pop up menu associated with the object as shown at 34, 36, 38 and 42.

Mouse events associated with a pointer on the current selected object in a window 44 are routed to that object for display of the associated pop up menu 50. This logic is performed recursively for each set of objects and at each level of a nested object hierarchy. Thus, a call to a particular routine may result in another call to the same routine to complete the processing.

Figure 1C is a flow chart that sets forth the logic flow in accordance with the subject invention. Processing commences at decision block 52 when a program detects a selection. At decision block 52, a test is performed to determine if a user has requested program termination. If the user has asked to terminate the program, then processing is finished. If not, then further testing is performed at decision block 53 to determine if a mouse click event has been detected. If the event is not a mouse click, then other processing irrelevant to the subject invention is performed.

If the event is a mouse event, then a test is performed at decision block 54 to determine if the mouse was clicked on the menu bar. If the mouse click is not made on the menu bar, then another test is performed at decision block 55 to determine if the selection is on a current selection. If the click was detected on a non-current selection, then processing is passed to other logic irrelevant to the subject invention. However, if the click was in a current selection, then a pop up menu associated with the current selection is displayed as shown in function block 56 and control is passed to label 76 to continue other processing.

If the mouse was clicked on the menu bar, then control is passed to decision block 58 to determine if the icon is the icon that was opened to display the window. If so, then a pop up menu associated with the object icon is displayed as shown in function block 59 and control is passed to label 76 to continue processing.

If the icon was not the object icon, then another test is performed at decision block 60 to determine if the one icon represents the group of selected objects in this window. If so, then a pop up menu associated with the selected object is displayed at function block 62 and control is passed to label 76 to continue processing.

If the icon was not the selected object icon, then a further test is performed at decision block 64 to detect if the window icon has been clicked on. If so, then a pop up menu associated with the window icon is presented to the user as shown at function block 70 and control is passed to label 76 to continue processing.

If the icon was not the window icon, then a final test is performed at decision block 72 to determine if a help icon has been clicked upon. If so, then an associated pop up menu is presented at function block 74 and control is passed to label 76 to continue processing. If not a help icon, then processing is continued at label 76.

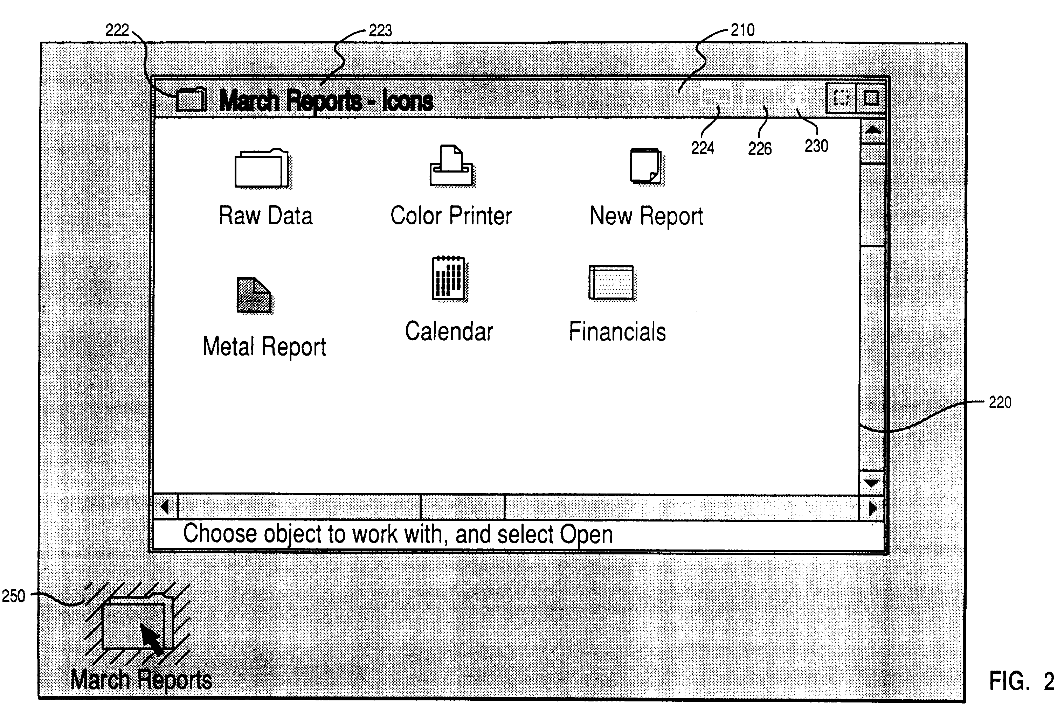

Figure 1D is a display showing an initial folder 99 in accordance with the subject invention. The folder's contents are subsequently opened in Figure 2 by a user desiring access to the contents. The menu bar 210 and title bar for the window 220 are combined in this example. One of ordinary skill in the art will realize that they could be separate lines of a window. The content of the menu bar 210 is: a folder icon representing the March Reports Folder 222; a title of the folder and type of view (March Reports - Icons) 223; an icon representing an object selected in the window 224 (none selected in this example); an icon representative of the window 226; and an icon representing a Help object (information (i)) 230. The two remaining symbols on the menu bar are buttons for sizing the window and are ancillary to the subject invention. The stripes behind the March Reports icon 250 on the desktop display indicate that a window is currently open on this object.

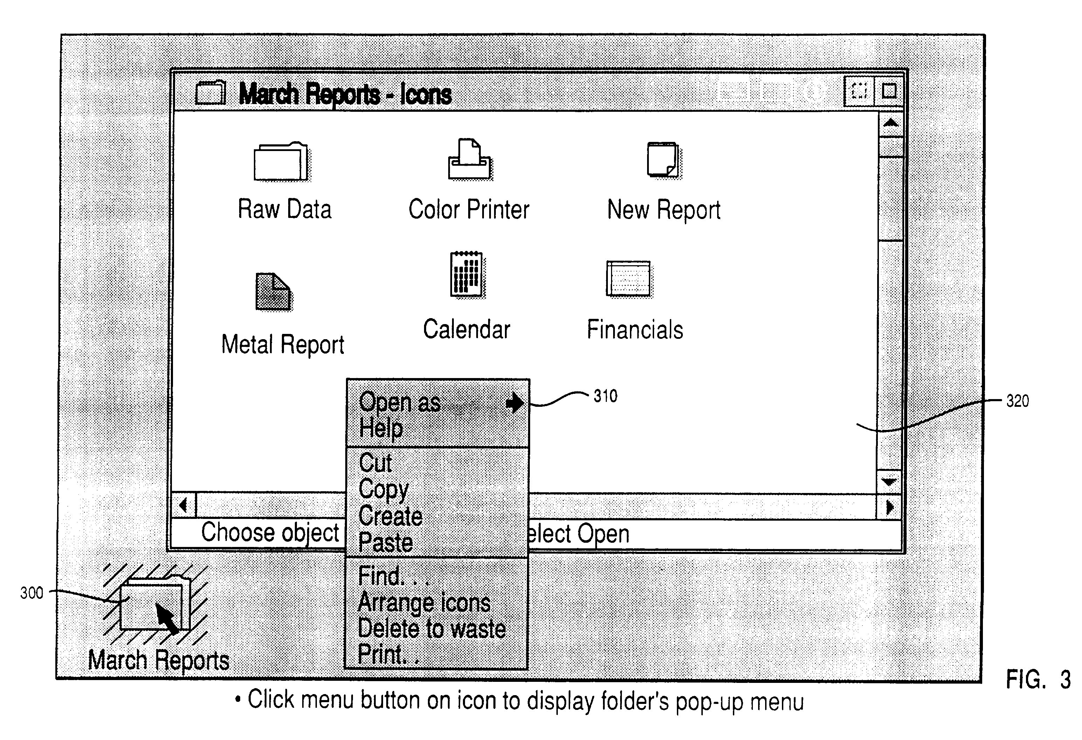

Figure 3 is an illustration of a display with a set of selections available for a particular icon in accordance with the subject invention. When a user clicks a mouse button on the mouse with the cursor pointer 300 located over the folder icon on the desktop, a pop up menu 310 for the folder is displayed overlaying the desktop information 320. This menu is typically unique to the object it is associated with.

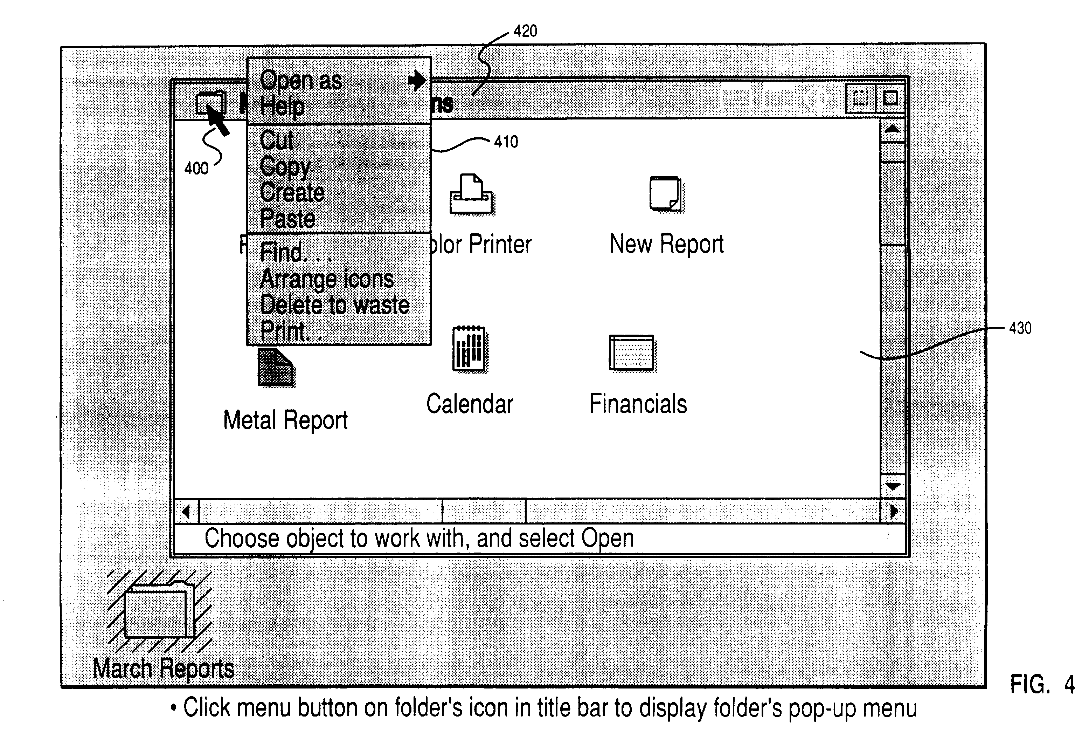

Referring to Figure 4, there is shown a display with a set of selections available for a particular icon in a menu bar in accordance with the subject invention. If a user clicks a menu button on the mouse while the cursor pointer 400 is over a folder icon in the menu bar 420 of the display 430, an associated pop up menu is displayed as shown at 410.

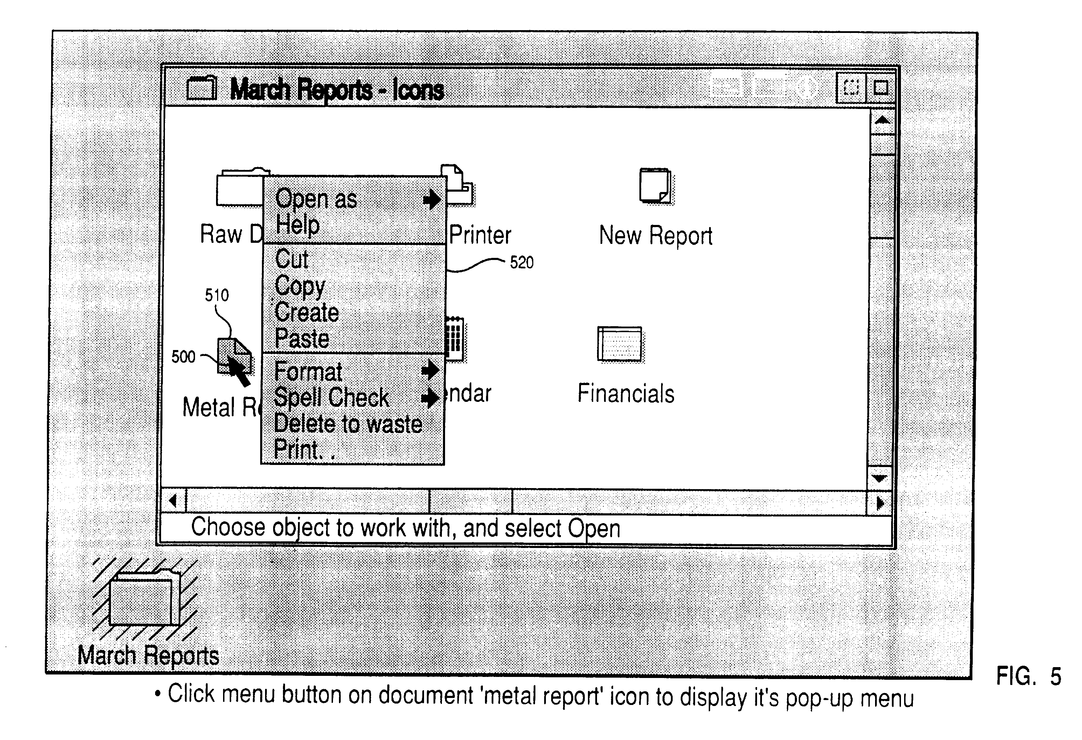

Figure 5 illustrates a display with a set of selections available for a particular icon in accordance with the subject invention. If a user clicks the menu button on the mouse when the cursor pointer 500 is over a report document icon 510, an associated pop up menu is displayed as shown at 520.

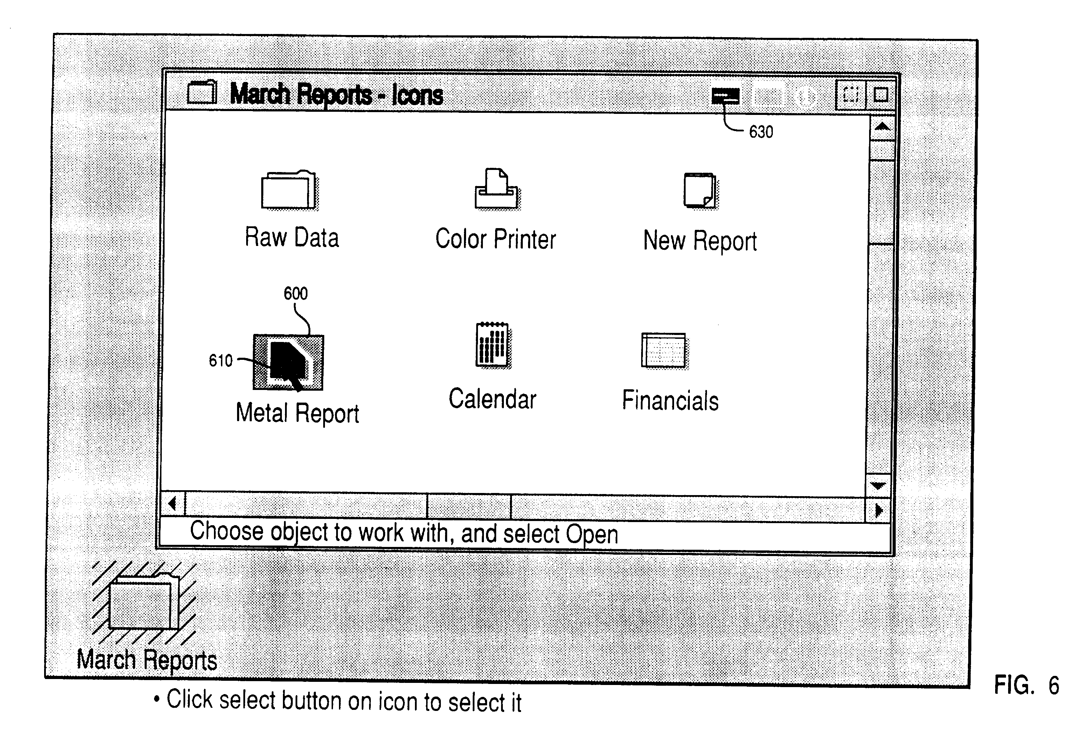

In Figure 6 there is shown a display with a particular icon selected in accordance with the subject invention. The report icon 600 is selected by positioning the cursor pointer 610 over the report icon and clicking a mouse button. This selection process associated the selected icon object 630 in the menu bar with the report that was selected.

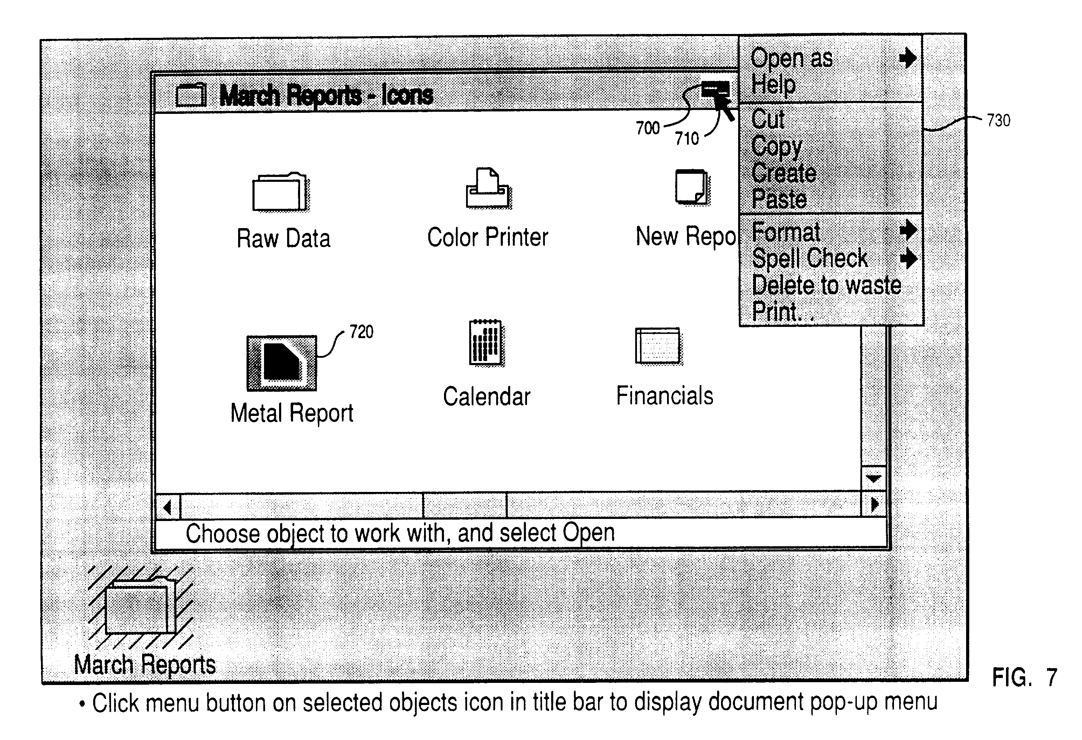

Referring to Figure 7, there is shown a display with a particular icon in the menu bar selected and the selection choices for the icon presented in accordance with the subject invention. Since the selected icon 700 in the menu bar is associated with the report icon 720, when a user clicks the menu button of the mouse while the cursor arrow 710 is positioned over the selected object icon, the same pop up menu 730 is displayed as in Figure 5.

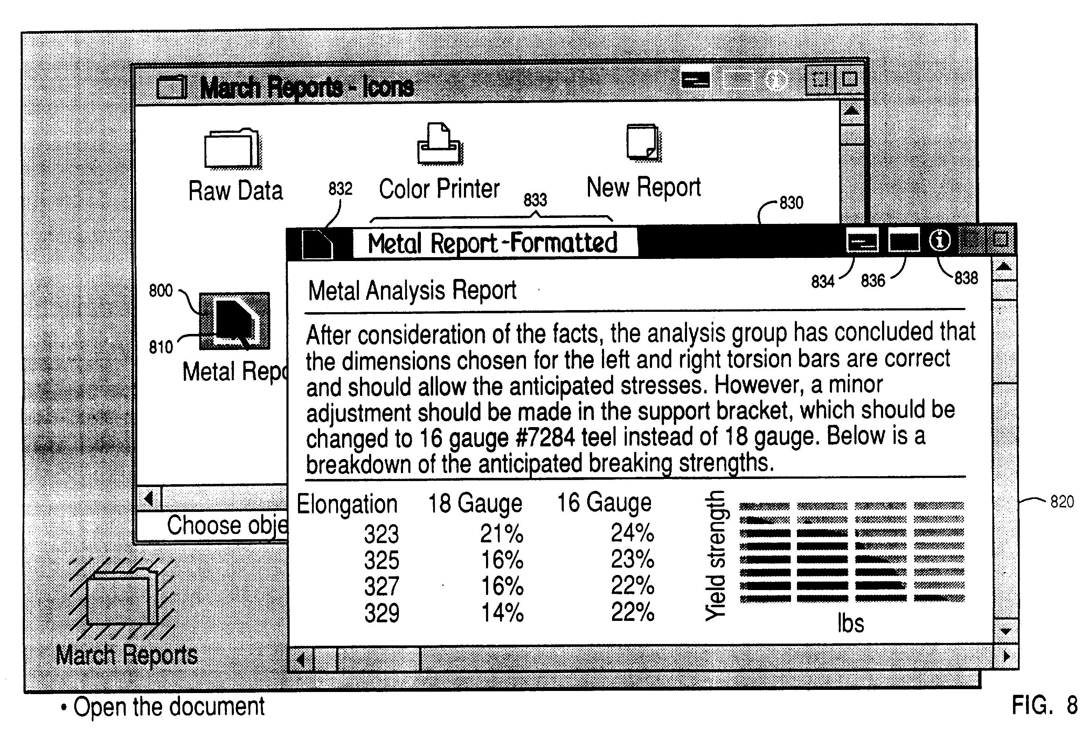

In Figure 8, there is shown a display with a particular icon's associated document opened in accordance with the subject invention. If a user opens a window by positioning the cursor arrow 810 over the report icon 800 and pressing the mouse button, a window 820 containing the report is presented to the user. Note that the new window 820 has a menu bar 830 with information associated with the report icon. The content of the new menu bar 830 is: a document icon 832 associated with the report icon 800; the title information 833; an icon representing a selected object 834 (none currently selected); an icon representing the new window 836; and an icon representative of a help function 838.

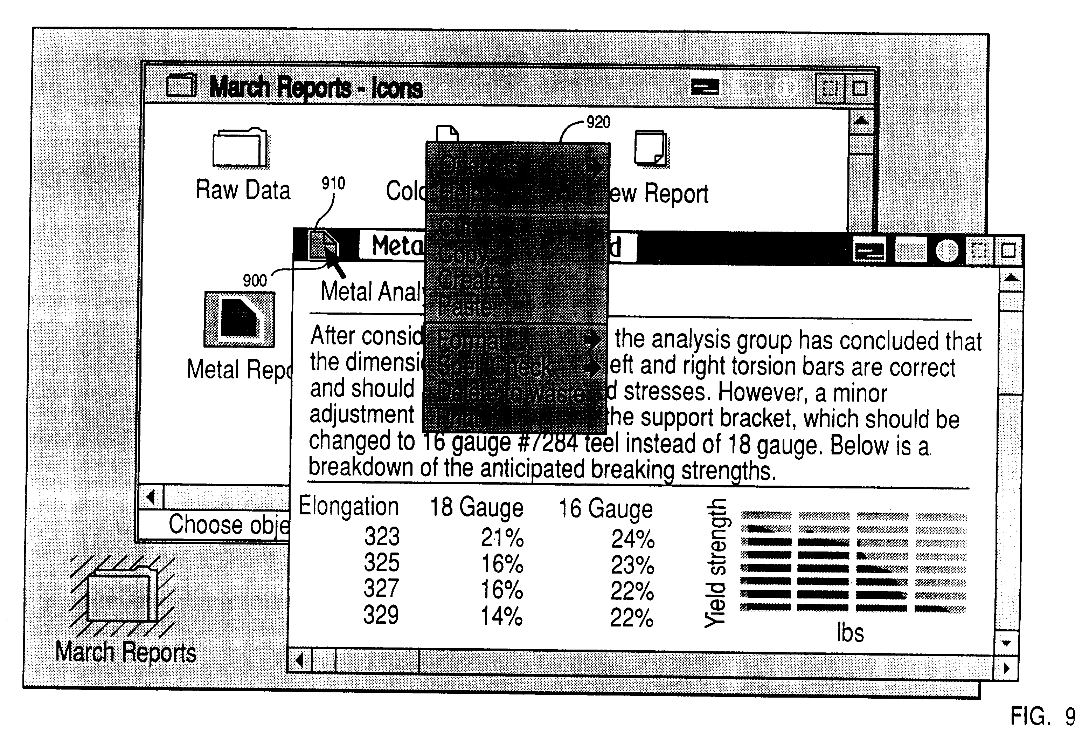

In Figure 9, there is shown a display with a particular document's pop up display invoked by selection from a menu icon in accordance with the subject invention. If a user presses the menu button while the arrow cursor 900 is positioned over the report icon in the title bar 910, a pop up menu 920 associated with the report is displayed.

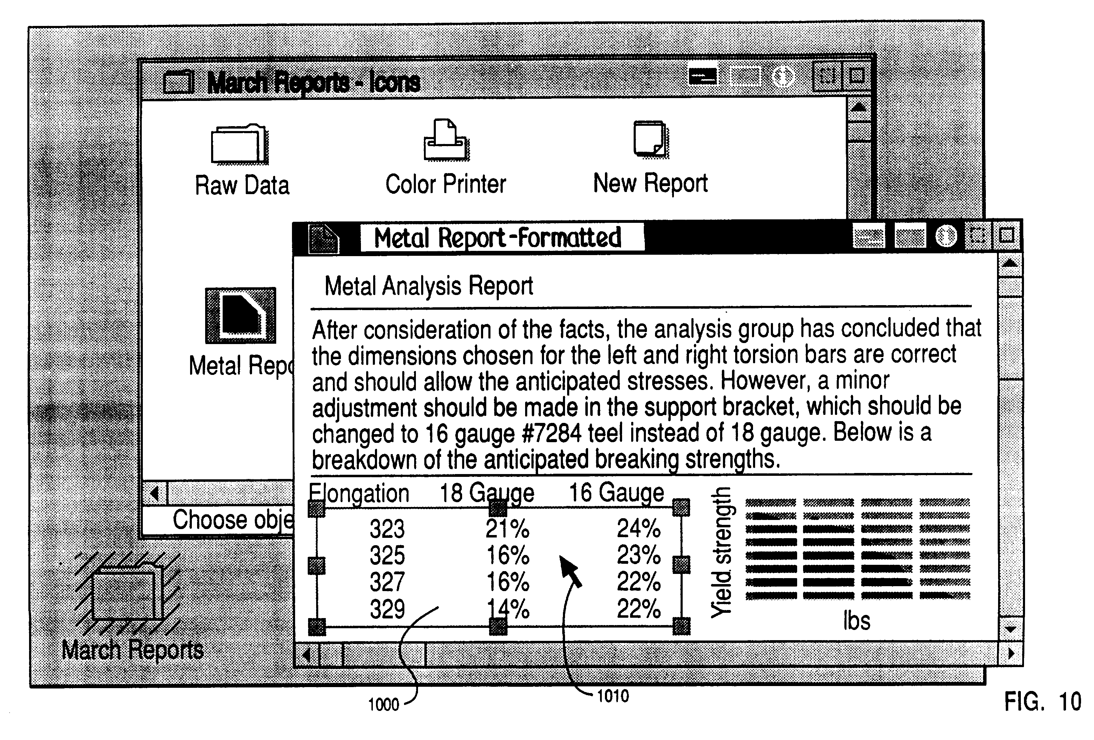

In Figure 10, there is shown a display with a particular table selected in accordance with the subject invention. If a user clicks the select button on the mouse when the arrow cursor 1010 is over a table 1000, the table is selected.

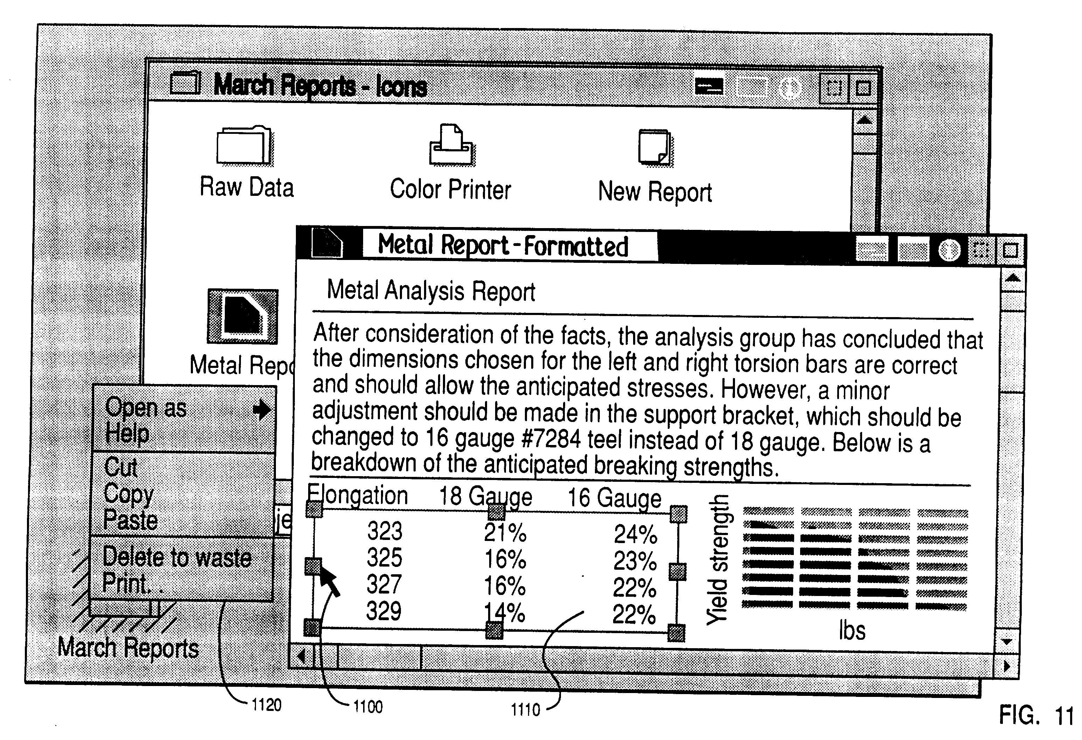

Figure 11 shows a pop up menu associated with a particular table in accordance with the subject invention. If a user clicks the menu button while the cursor arrow 1100 is over the table 1110, a pop up menu 1120 is displayed.

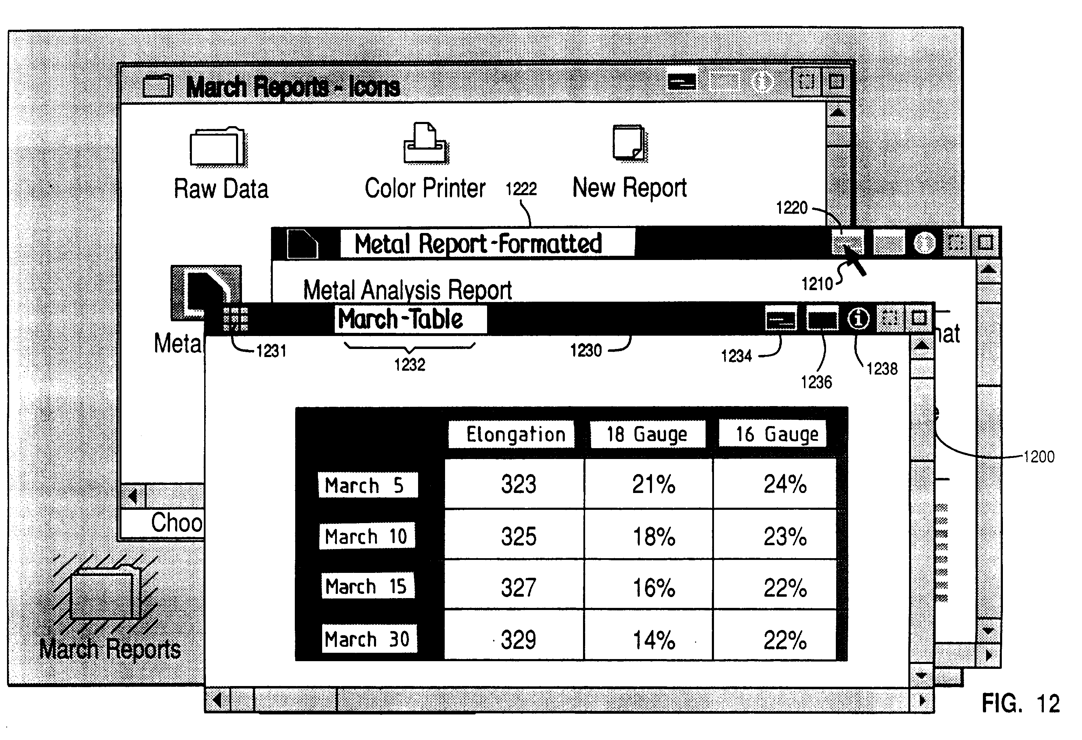

Referring to Figure 12, there is shown a direct invocation of a table from a particular menu icon in accordance with the subject invention. A user opens a window 1200 by positioning the arrow cursor 1210 over the icon representing the selected table object 1220 of the menu bar 1222 and pressing the menu button. Another menu bar 1230 is created and displayed in the window 1200. The new menu bar 1230 has contents associated with the table, comprising: a table icon representing the table 1231, a title (March - Table) 1232, an icon representing an object or objects selected in the window (none are currently selected) 1234, an icon representing the window 1236, and an icon representing the help object 1238.

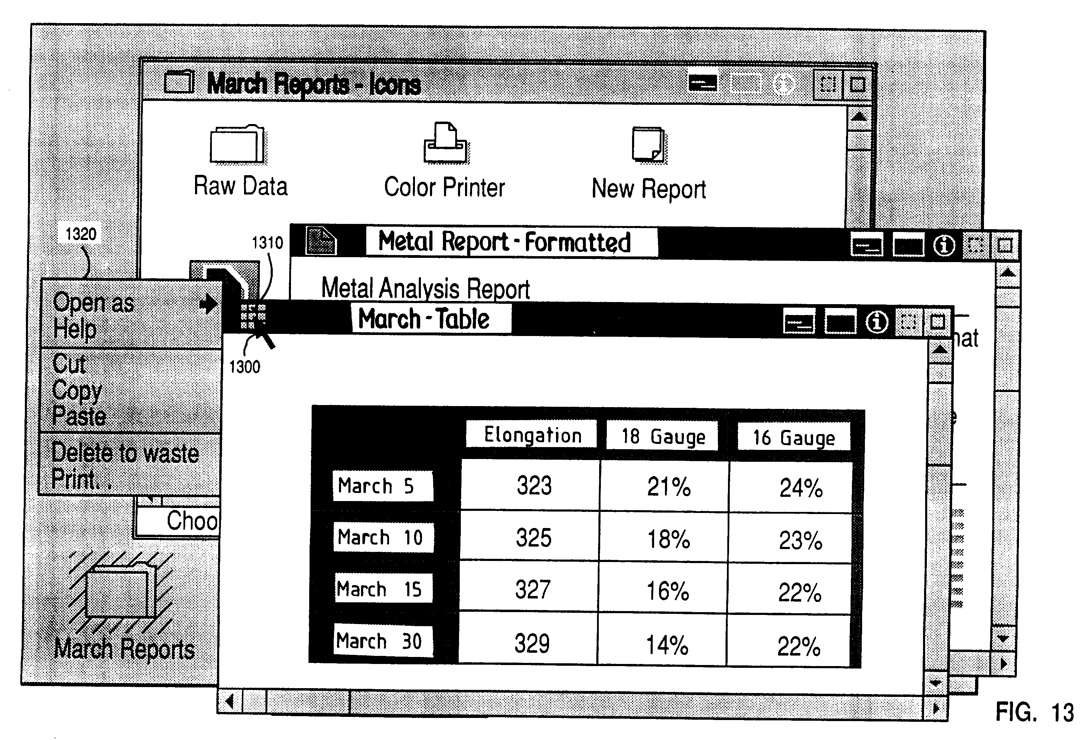

In Figure 13 there is an illustrated a display with a pop up menu associated with a menu icon in a report in accordance with the subject invention. If a user presses the mouse button while the arrow cursor 1300 is positioned over the report icon 1310, then a pop up window 1320 appears on the display.

It should be clear to one of ordinary skill in the art that such nesting of windows could continue indefinitely to the cells and headings of the table, and the contents of each cell depending on the composition of the objects involved.

It will be apparent to one skilled in the art that notwithstanding an embodiment of present invention described herein being direct towards the consistent display of menus it is not limited to the same. It could equally well apply to the duplication of other characteristics of the objects. It may relate to the duplication of the behavioural characteristics of the objects. For example, a plurality of identical icons may, say, all dispose of word processing documents thereby implementing a plurality drop icons all having the same response to a stimulus for use in a drag and drop environment.

## Claims

1. An object oriented display system comprising:
means for displaying a graphical representation of a computer system object on a display device;
means for displaying a plurality of icons, each associated with a computer system object or group of objects, said objects each having selectable actions associated therewith;
means for selecting one of said icons; and
means responsive to selection of one of said icons for determining an object type for the selected icon and causing the object or one of the group of objects associated with said selected icon to effect displaying of a submenu of selectable actions in accordance with the determined object type, said submenu being the same for all selections of icons which are associated with the same objects.

2. A system according to claim 1, wherein said means for causing the object or objects to display a submenu allowing action selection comprises:
means for sending a message to an object of said determined object type; and
means for displaying actions associated with said determined object type in response to said message.

3. A system according to claim 1 or claim 2, wherein said submenu comprises a plurality of objects representing associated actions and wherein said system further comprises:
icon manipulation means for moving said icons on said display; and
means for dropping an icon on one of said displayed objects to cause said action to occur for said object.

4. A system according to any preceding claim, wherein said means for displaying includes windowing means for displaying said icons, and wherein said windowing means is an object having an associated icon.

5. A method of selecting actions to be performed on one or more computer system objects, each of said one or more computer system objects having selectable actions associated therewith, the method comprising the steps of:
displaying a graphical representation of an object on a display means;
displaying a plurality of icons, each associated with an object or group of objects;
responsive to operator selection of one of said icons, determining an object type for the selected icon; and
causing the object or one of the group of objects associated with the selected icon to effect displaying of a submenu of the selectable actions in accordance with the determined object type, wherein the displayed submenu is the same for all selections of icons which are associated with the same objects.

6. A method according to claim 5, wherein the step of causing a submenu to be displayed includes the steps of:
sending a message to an object of said determined object type; and
displaying a submenu of selectable actions for said selected object type in response to said message.

7. A method according to claim 5 or claim 6, wherein said submenu comprises a plurality of objects representing associated actions and wherein said method further comprises:
the steps of moving said icons on said display; and
dropping an icon on one of said displayed objects to cause said action to occur for said object.

8. A method according to any one of claims 5 to 7, wherein said display step further comprises displaying said objects in a window and wherein said window is an object having an associated icon.

## Patentansprüche

1. Objektorientiertes Anzeigesystem, das folgendes umfaßt:
ein Mittel, um eine grafische Darstellung eines Rechnersystemobjekts auf einem Bildschirm anzuzeigen;
ein Mittel, um eine Vielzahl von Symbolen anzuzeigen, von denen jedes einem Rechnersystemobjekt oder einer Gruppe von Objekten zugeordnet ist, wobei jedes der Objekte damit verbundene, auswählbare Aktionen hat;
ein Mittel, um eines der Symbole auszuwählen; und
ein Mittel, das auf die Auswahl von einem der Symbole anspricht, um für das ausgewählte Symbol einen Objekttyp festzustellen und um zu bewirken, daß das Objekt oder eine der Objektgruppen, das/die dem ausgewählten Symbol zugeordnet ist, die Anzeige eines Untermenüs mit auswählbaren Aktionen gemäß dem festgestellten Objekttyp vornimmt, wobei das Untermenü für alle Auswahlmöglichkeiten an Symbolen, die denselben Objekten zugeordnet sind, gleich ist.

2. System nach Anspruch 1, wobei das Mittel, das bewirkt, daß das Objekt oder die Objekte ein Untermenü anzeigen, welches die Auswahl von Aktionen ermöglicht, folgendes umfaßt:
ein Mittel, um eine Nachricht an ein Objekt des festgestellten Objekttyps zu senden; und
ein Mittel, um als Antwort auf die Nachricht Aktionen anzuzeigen, die dem festgestellten Objekttyp zugeordnet sind.

3. System nach Anspruch 1 oder Anspruch 2, wobei das Untermenü eine Vielzahl von Objekten umfaßt, die zugehörige Aktionen darstellen, und wobei das System des weiteren folgendes umfaßt:
ein Symbolmanipulationsmittel, um die Symbole auf dem Bildschirm zu bewegen; und ein Mittel, das dazu dient, ein Symbol auf einem der angezeigten Objekte abzulegen, um zu bewirken, daß die Aktion für das Objekt stattfindet.

4. System nach einem der vorhergehenden Ansprüche, wobei das Mittel zur Anzeige ein Mittel für die Darstellung in Fenstertechnik enthält, um die Symbole anzuzeigen, und wobei das Mittel für die Darstellung in Fenstertechnik ein Objekt ist, das ein zugehöriges Symbol hat.

5. Verfahren zur Auswahl von Aktionen, die an einem oder mehreren Rechnersystemobjekten ausgeführt werden sollen, wobei jedes des einen oder der mehreren Rechnersystemobjekts(e) damit verbundene, auswählbare Aktionen hat, wobei das Verfahren die folgenden Schritte umfaßt:
Anzeigen einer grafischen Darstellung eines Objekts auf einem Anzeigemittel;
Anzeigen einer Vielzahl von Symbolen, von denen jedes einem Objekt oder einer Gruppe von Objekten zugeordnet ist;
als Antwort auf die Auswahl von einem der Symbole durch den Bediener Feststellen eines Objekttyps für das ausgewählte Symbol; und
Bewirken, daß das Objekt oder eine der Objektgruppen, das/die dem ausgewählten Symbol zugeordnet ist, die Anzeige eines Untermenüs mit den auswählbaren Aktionen gemäß dem festgestellten Objekttyp vornimmt, wobei das angezeigte Untermenü für alle Auswahlmöglichkeiten an Symbolen, die denselben Objekten zugeordnet sind, gleich ist.

6. Verfahren nach Anspruch 5, wobei der Schritt, der bewirkt, daß ein Untermenü angezeigt wird, die folgenden Schritte einschließt:
Senden einer Nachricht an ein Objekt des festgestellten Objekttyps; und
als Antwort auf die Nachricht Anzeigen eines Untermenüs mit auswählbaren Aktionen für den ausgewählten Objekttyp.

7. Verfahren nach Anspruch 5 oder Anspruch 6, wobei das Untermenü eine Vielzahl von Objekten umfaßt, die zugehörige Aktionen darstellen, und wobei das Verfahren des weiteren folgendes umfaßt:
die Schritte der Bewegung der Symbole auf dem Bildschirm; und
Ablegen eines Symbols auf einem der angezeigten Objekte, um zu bewirken, daß die Aktion für das Objekt stattfindet.

8. Verfahren nach einem der Ansprüche 5 bis 7, wobei der Anzeigeschritt des weiteren die Anzeige der Objekte in einem Fenster umfaßt und wobei das Fenster ein Objekt ist, das ein zugehöriges Symbol hat.

## Revendications

1. Système d'affichage orienté objet comprenant :
un moyen destiné à afficher une représentation graphique d'un objet d'un système d'ordinateur sur un dispositif d'affichage,
un moyen destiné à afficher une pluralité d'icônes, chacune étant associée à un objet ou à un groupe d'objets du système d'ordinateur, lesdits objets étant chacun associés à des actions pouvant être sélectionnées,
un moyen destiné à sélectionner l'une desdites icônes, et
un moyen répondant à la sélection de l'une desdites icônes afin de déterminer un type d'objet pour l'icône sélectionnée et à amener l'objet ou l'un des groupes d'objets associés à ladite icône sélectionnée à réaliser l'affichage d'un sous-menu d'actions pouvant être sélectionnées conformément au type d'objet déterminé, ledit sous-menu étant le même pour toutes les sélections d'icônes qui sont associées aux mêmes objets.

2. Système selon la revendication 1, dans lequel ledit moyen destiné à amener l'objet ou des objets à afficher un sous-menu permettant une sélection d'une action comprend :
un moyen destiné à envoyer un message à un objet dudit type d'objet déterminé, et
un moyen destiné à afficher des actions associées audit type d'objet déterminé en réponse audit message.

3. Système selon la revendication 1 ou la revendication 2, dans lequel ledit sous-menu comprend une pluralité d'objets représentant des actions associées et dans lequel ledit système comprend en outre :
un moyen de manipulation d'icône destiné à déplacer lesdites icônes sur ledit dispositif d'affichage, et un moyen destiné à relâcher une icône sur l'un desdits objets affichés afin d'amener ladite action à s'exécuter pour ledit objet.

4. Système selon l'une quelconque des revendications précédentes, dans lequel ledit moyen destiné à afficher comprend un moyen d'établissement de fenêtres afin d'afficher lesdites icônes, et dans lequel ledit moyen d'établissement de fenêtres est un objet comportant une icône associée.

5. Procédé de sélection d'actions à exécuter sur un ou plusieurs objets d'un système d'ordinateur, chacun desdits un ou plusieurs objets de système d'ordinateur comportant des actions pouvant être sélectionnées qui lui sont associées, le procédé comprenant les étapes consistant à :
afficher une représentation graphique d'un objet sur un moyen d'affichage,
afficher une pluralité d'icônes, chacune étant associée à un objet ou à un groupe d'objets,
en répondant à la sélection par un opérateur de l'une desdites icônes, déterminer un type d'objet pour l'icône sélectionnée, et
amener l'objet ou un objet parmi le groupe d'objets associés à l'icône sélectionnée à effectuer un affichage d'un sous-menu des actions pouvant être sélectionnées conformément au type d'objet déterminé, dans lequel le sous-menu affiché est le même pour toutes les sélections d'icônes qui sont associées aux mêmes objets.

6. Procédé selon la revendication 5, dans lequel l'étape consistant à amener un sous-menu à être affiché comprend les étapes consistant à :
envoyer un message à un objet dudit type d'objet déterminé, et
afficher un sous-menu d'actions pouvant être sélectionnées pour ledit type d'objet sélectionné en réponse audit message.

7. Procédé selon la revendication 5 ou la revendication 6, dans lequel ledit sous-menu comprend une pluralité d'objets représentant des actions associées et dans lequel ledit procédé comprend en outre :
les étapes consistant à déplacer lesdites icônes sur ledit affichage, et
relâcher une icône sur l'un desdits objets affichés afin d'amener ladite action à se produire pour ledit objet.

8. Procédé selon l'une quelconque des revendications 5 à 7, dans lequel ladite étape d'affichage comprend en outre l'affichage desdits objets dans une fenêtre et dans lequel ladite fenêtre est un objet comportant une icône associée.
